# EUROPÄISCHE PATENTSCHRIFT

(11) **EP 1 845 275 B1**
(45) Veröffentlichungstag und Bekanntmachung des Hinweises auf die Patenterteilung: **11.11.2009**
(21) Anmeldenummer: 07005869.8
(22) Anmeldetag: 22.03.2007
(51) Int. Cl.: F16D 13/75, F16D 27/00

(54) **Wipphebelaktor mit Nachstellvorrichtung**
Rocker lever actuator with adjustment device
Actionneur de levier à ressort doté d'un dispositif de réglage

(30) Priorität: 12.04.2006 DE 102006017144
(43) Veröffentlichungstag der Anmeldung: 17.10.2007
(73) Patentinhaber: LuK Lamellen und Kupplungsbau Beteiligungs KG, 77815 Bühl (DE)
(72) Erfinder: Burkhart, Dirk, 76889 Klingenmünster (DE); Ahnert, Gerd, 77880 Sasbach (DE)

(56) Entgegenhaltungen:
- EP-A1- 1 455 106
- WO-A-2005/028900
- DE-A1- 10 258 836

## Beschreibung

Die vorliegende Erfindung betrifft einen Wipphebelaktor, der insbesondere zur Betätigung einer Kupplung eines Fahrzeugs vorgesehen ist, mit mindestens einem, eine veränderliche Betätigungskraft zum Öffnen und/oder Schließen der Kupplung ausübenden Wipphebel, der mittels mindestens einer Feder beaufschlagbar ist und bei dem ein Hebeldrehpunkt des Wipphebels durch Verlagerung einer mittels eines Antriebs betätigten, an einer Traverse gelagerten Laufrolle verlagerbar ist, an der der Wipphebel über eine geneigte Wipphebelkurve abgestützt ist und der Wipphebelaktor eine aktiv verstellbare Einrichtung besitzt zum Ausgleich einer Veränderung des Kraft-Weg-Verhaltens der Kupplung.

Ein Wipphebelaktor nach den Oberbegriff des Anspruchs 1 ist aus EP-A-1 455 106 bekannt.

Zur automatisierten Betätigung der Kupplung eines Fahrzeugs sind bereits Hebelsysteme bekannt geworden, die beispielsweise einen Hebel mit unveränderlicher Hebellänge besitzen, der mittels eines elektromotorischen Aktuators zum Öffnen und/oder Schließen der Kupplung angetrieben werden kann. Bei dem Wipphebelaktor, der im Falle einer normal offenen Kupplung auch als Wipphebeleinrücker oder Hebeleinrücker bezeichnet wird, handelt es sich um eine durch einen Hebel gebildete Wippe, die mit veränderlichem Hebeldrehpunkt ausgestattet ist. An einem Ende des Hebels wirkt nun die Kraft einer oder auch zweier Schraubenfedern mit einer linearen Kraft-Weg-Kennlinie und am anderen Ende wirkt die Betätigungskraft der Kupplung, die der von der Kupplung stammenden Kupplungskraft ein Gleichgewicht hält. Die Kupplungskraft weist dabei oft eine nicht-lineare Kraft-Weg-Kennlinie auf. Der Wipphebel besitzt eine geneigte Wipphebelkurve, über die auf die eindeutige Zuordnung zwischen einer Laufrolle und der Neigung des Wipphebels Einfluss genommen werden kann.

Darüber hinaus besitzt die Wipphebelkurve auch noch die Funktion, eine definierte Rückstellkraft auf die Laufrolle zu bewirken, sodass beispielsweise im Falle eines Stromausfalls die Laufrolle in Richtung zu einem dann nicht mehr angetriebenen Elektromotor zurückläuft und es so zu einem selbsttätigen Öffnen des Wipphebelaktors kommt. Die normal offene und vom Wipphebelaktor zur Momentenübertragung zugedrückte Kupplung geht dann in den offenen Zustand über.

Die nominale Betätigungskennlinie, also die Kraft-Weg-Kennlinie der Kupplung führt im Zusammenspiel mit dem Wipphebelaktor mit definierter Kraft-Weg-Kennlinie der den Wipphebel beaufschlagenden Federn und der Kontur der Wipphebelkurve zu einer definierten Betätigungskraft zur Verlagerung der Laufrolle. Diese Betätigungskraft wird beispielsweise über einen Kugelumlauftrieb oder ein anderes Getriebe zur Wandlung rotatorischer Bewegung in eine translatorische Bewegung in ein Betätigungsmoment gewandelt, welches beispielsweise von einem Elektromotor aufgebracht wird.

Kommt es nun beispielsweise aufgrund von Verschleiß der Reibbeläge der Kupplung zu einer Verschiebung der Betätigungskennlinie der Kupplung, so stellt sich am Wipphebelaktor eine neue Gleichgewichtslage des Wipphebels ein, es kommt also zu einer Änderung der Neigung des Wipphebels gegenüber der nominal aus der Auslegungsrechnung vorgesehenen Neigung. Diese Veränderung der Neigung des Wipphebels führt aufgrund der geneigten Wipphebelkurve zu einer Veränderung der an der Laufrolle wirkenden Kraft und damit zu einem Ansteigen des erforderlichen Motormoments des Elektromotors zum Halten oder Bewegen der Laufrolle. Das veränderte Motormoment wiederum führt zu einer Zunahme der Leistungsaufnahme des Elektromotors und damit zu einem Temperaturanstieg.

Um nun dieses Problem zu beseitigen, ist anhand der auf die Anmelderin zurückgehenden DE 10 2006 008 673.2siehe die Spät veröffentlichte EP-A-1 826 430 bereits ein Wipphebelaktor mit einer Nachstellvorrichtung bekannt geworden. Bei diesem bekannten Wipphebelaktor ist am kupplungsseitigen Ende des Wipphebels ein Nachstellkeilpaar vorgesehen, welches der Beaufschlagung des Kupplungslagers dient und bei dem Auflagerflächen des Nachstellkeilpaares relativ zu einer Längsachse des Wipphebels in der Höhe verstellbar sind.

Damit weist der bekannte Wipphebelaktor getrennt vom Wipphebel verstellbare Auflagerflächen auf, die zur Betätigung des Kupplungslagers vorgesehen sind. Bei diesem bekannten Wipphebelaktor mit Nachstellvorrichtung findet der Nachstellvorgang der Auflagerfläche bei weitgehend geschlossener Kupplung statt, also während großer Kupplungskraft und damit während des Auftretens großer Kräfte im Wipphebelaktor. Während der Nachstellung wird der Wipphebelaktor von der Kupplungskraft beaufschlagt, sodass der Wipphebelaktor zusätzlich zu der, der Kupplungskraft ein Gleichgewicht haltenden Betätigungskraft, auch noch eine Nachstellkraft aufbringen muss, um entsprechende Nachstellschritte durchführen zu können.

Ausgehend hiervon liegt der vorliegenden Erfindung nunmehr die Aufgabe zugrunde, einen Wipphebelaktor zu schaffen, bei dem die Belastung des Wipphebelaktors während des Nachstellvorgangs verringert ist.

Die Erfindung schafft nun zur Lösung dieser Aufgabe einen Wipphebelaktor mit den Merkmalen des Anspruchs 1. Vorteilhafte Ausgestaltungen hiervon sind in den weiteren Ansprüchen beschrieben.

Die Erfindung schafft einen Wipphebelaktor, der insbesondere zur Betätigung einer Kupplung eines Fahrzeugs vorgesehen ist, mit mindestens einem, eine veränderliche Betätigungskraft zum Offnen und/oder Schließen der Kupplung ausübenden Wipphebel, der mittels mindestens einer Feder beaufschlagbar ist und bei dem ein Hebeldrehpunkt des Wipphebels durch Verlagerung einer mittels eines Antriebs betätigten, an einer Traverse gelagerten Laufrolle verlagerbar ist, an der der Wipphebel über eine geneigte Wipphebelkurve abgestützt ist und der Wipphebelaktor eine aktiv verstellbare Einrichtung besitzt zum Ausgleich einer Veränderung des Kraft-Weg-Verhaltens der Kupplung, wobei die Einrichtung mittels Verlagerung der Traverse in einer Überweg, der eine Verlagerungsbewegung der Traverse bei einer kupplungsbetätigung Überschreitet, bei weitgehend offener Kupplung zur Veränderung der Position des der Kupplung zugewandten Endes des Wipphebels oder eines Übertragungshebels relativ zu einer Kupplungsfeder ausgebildet ist.

Hat sich nun die Betätigungskennlinie der Kupplung beispielsweise aufgrund von Verschleiß der Reibbeläge verschoben, so kann mittels der Einrichtung mittels einer Verlagerung der Traverse bei einer weitgehend offenen Kupplung das der Kupplung zugewandte Ende des Wipphebels oder eines Übertragungshebels relativ zu einer Kupplungsfeder verändert werden, also beispielsweise das der Kupplung zugewandte Ende des Wipphebels oder des Übertragungshebels geringfügig angehoben werden, sodass der durch den Belagverschleiß größer werdende Lüftweg der Kupplung nicht durch einen größer werdenden Verfahrweg der Traverse und einem damit einhergehenden Anstieg der Rückstellkraft ausgeglichen werden muss. Darüber hinaus findet der Nachstellvorgang mittels der Einrichtung bei einer weitgehend offenen Kupplung statt, während einer Aktorstellung also, bei der die von der Kupplung auf den Aktor ausgeübte Kraft wesentlich kleiner ist als bei weitgehend geschlossener oder vollständig geschlossener Kupplung.

Es ist dabei nach der Erfindung vorgesehen, dass die Einrichtung ein an der Traverse vorgesehener Hebel ist, der bei Verlagerung der Traverse in einen Überweg, der eine Verlagerungsbewegung der Traverse bei einer Kupplungsbetätigung überschreitet, ein Mittel betätigt, welches die Position des der Kupplung zugewandten Endes des Wipphebels relativ zu einer Kupplungsfeder verändert. Die Verlagerungsbewegung der Traverse findet dabei bei weitgehend offener Kupplung in Richtung eines "Kupplung weiter öffnen" gerichteten Überwegs statt, also bei kleiner Belastung des Wipphebelaktors durch die Kupplung.

Es ist dabei nach der Erfindung vorgesehen, dass es sich bei dem Mittel um einen mit einem Eingriffsrad drehfest verbundenen Gewindebolzen handeln kann, und der Hebel zur Betätigung des Eingriffsrads zur Drehbewegung in beide Drehrichtungen ausgebildet ist. Mit dem an der Traverse vorgesehenen Hebel kann daher das Eingriffsrad in beide Drehrichtungen verstellt werden und damit die Position des der Kupplung zugewandten Endes des Wipphebels oder des Übertragungshebels auch in beide Richtungen verändert werden, also beispielsweise in Richtung zum Kupplungslager hin und auch in Richtung vom Kupplungslager weg. Da die Traverse von dem am Wipphebel ohnehin vorgesehen Antrieb betätigt wird, kann mit dem Antrieb ein Nachstellvorgang in beide Richtungen realisiert werden.

Nach der Erfindung ist es dabei vorgesehen, dass der Hebel zwei Eingriffsklinken besitzt, von denen jeweils eine zur Betätigung des Eingriffsrads in jeweils eine der beiden Drehrichtungen ausgebildet ist und der Hebel darüber hinaus federnd ausgebildet ist. Durch die federnde Ausbildung des Hebels oder am Hebel vorgesehener Eingriffsklinken wird erreicht, dass die zum jeweiligen Nachstellvorgang in die jeweilige Richtung nicht benötigte Eingriffsklinke nach außen federnd ausweichen kann, wenn sie mit dem Eingriffsrad in Kontakt kommt und somit das Eingriffsrad nicht in eine nicht gewünschte Drehrichtung verstellt.

Nach einer Weiterbildung der Erfindung ist es vorgesehen, dass sich der Gewindebolzen im Schraubeingriff befindet mit einer Gewindebuchse, die an einem relativ zu einem Gestell verschwenkbaren Gehäuse des Wipphebelaktors drehfest vorgesehen ist derart, dass eine Drehbewegung des Gewindebolzens zu einer Verschwenkbewegung des Gehäuses führt. Wird nun mittels der Eingriffsklinken das Eingriffsrad beispielsweise um einen vorbestimmten Drehwinkelbereich gedreht, so führt dies zu einer entsprechenden Drehbewegung des Gewindebolzens, der an dem Gestell drehbar gelagert sein kann, sodass die mit dem Gewindebolzen im Schraubeingriff angeordnete Gewindebuchse relativ zum Gestell eine Höhenveränderung erfährt. Die Gewindebuchse ist drehfest am Gehäuse des Wipphebelaktors vorgesehen, das Gehäuse wiederum ist verschwenkbar bezüglich eines den Wipphebelaktor abstützenden Gestells vorgesehen, so führt die Drehbewegung des Gewindebolzens letztlich dazu, dass die Gewindebuchse an dem Gewinde des Gewindebolzens einen Vorschub erfährt und damit das Gehäuse des Wipphebelaktors am Gestell relativ zu diesem verschwenkt wird. Mit der Verschwenkbewegung des Gehäuses verändert sich die Position des der Kupplung zugewandten Endes des Wipphebels oder eines Übertragungshebels relativ zu der Kupplungsfeder. Damit kann das Gehäuse des Wipphebelaktors und damit der Wipphebel oder ein Übertragungshebel sowie dessen Ende relativ zur Kupplungsfeder in beide Richtung verstellt werden. Es kann von Vorteil sein, wenn das Gehäuse federbelastet an dem Gestell schwenkbar abgestützt ist, sodass die Federkraft ein Anheben des Gehäuses relativ zum Gestell unterstützen kann.

Nach einer modifizierten Ausführungsform ist ein Wipphebelaktor vorgesehen, bei dem die zur Beaufschlagung des Wipphebels vorgesehene Feder an einem Gewindebolzen abgestützt ist und sich der Gewindebolzen im Schraubeingriff befindet mit einem Gehäuse des Wipphebelaktors, sodass eine Drehbewegung des Gewindebolzens zu einer Veränderung der Federspannung führt und damit zu einer Veränderung der Position des der Kupplung zugewandten Endes des Wipphebels oder eines Übertragungshebels relativ zu der Kupplungsfeder. Weist nun der Wipphebelaktor ein Federnpaar zur Beaufschlagung des Wipphebels auf, so können sich beide Federn jeweils an einem Gewindebolzen abstützen und an der Traverse zwei Hebel angebracht sein mit jeweils zwei Eingriffsklinken, die zur Herbeiführung einer Drehbewegung eines jeweiligen, mit einem Gewindebolzen verbundenen Eingriffsrads ausgebildet sind. Durch die Veränderung der Vorspannung der den Wipphebel beaufschlagenden Federn wird damit ein Anheben bzw. Absenken des der Kupplungsfeder zugewandten Endes des Wipphebels oder eines Übertragungshebels erreicht, sodass auf diese Weise jeweils ein Nachstellvorgang in beide Richtungen möglich ist.

Nach einer Weiterbildung der Erfindung kann der Wipphebelaktor auch einen relativ zum Wipphebel verschwenkbaren Übertragungshebel besitzen, der am Wipphebel im Bereich des Wipphebelendes gelagert ist und im Bereich des gegenüberliegenden Endes mittels eines mit dem Gewindebolzen in Wirkverbindung stehenden Drehgelenkes relativ zu einem, eine Laufbahn der Laufrolle bildenden Gestell höhenverstellbar ist derart, dass eine Drehung des Gewindebolzens zu einer Veränderung der Position des der Kupplung zugewandten Endes des Übertragungshebels relativ zu der Kupplungsfeder führt. Es bedeutet dies mit anderen Worten, dass der Übertragungshebel relativ zum Wipphebel verschwenkbar ist und am Wipphebel im Bereich des Wipphebelendes gelagert ist, sodass über die Verschwenkung des Übertragungshebels relativ zum Wipphebel an der Lagerstelle eine Höhenveränderung des der Kupplung zugewandten Endes des Übertragungshebels statt findet, sodass durch die Drehbewegung des Gewindebolzens ein den Übertragungshebel beaufschlagendes Drehgelenk höhenverstellbar ist und zwar relativ zur Laufbahn der Laufrolle, sodass durch die Beaufschlagung des Übertragungshebels eine Verschwenkbewegung des Übertragungshebels an der Lagerstelle zum Wipphebel durchgeführt wird und somit das der Kupplung zugewandte Ende des Übertragungshebels relativ zu der Kupplungsfeder in beide Richtungen verändert werden kann.

Auch ist es nach einer Weiterbildung der Erfindung vorgesehen, dass der Wipphebelaktor einen relativ zum Wipphebel beabstandet angeordneten und verschwenkbaren Übertragungshebel besitzt, und zwischen dem Übertragungshebel und dem Wipphebel ein verlagerbarer Keil vorgesehen ist derart, dass eine Verlagerung des Keils an dem Wipphebel zu einer Veränderung des Abstands zwischen Übertragungshebel und Wipphebel führt und zu einer Veränderung der Position des der Kupplung zugewandten Endes des Übertragungshebels relativ zu der Kupplungsfeder. Wird nun der lageveränderliche Keil zwischen dem Übertragungshebel und dem Wipphebel verschoben, so verändert sich der Abstand zwischen dem Übertragungshebel und dem Wipphebel je nach der Richtung der Verlagerungsbewegung des Keils in positive oder in negative Richtung. Entsprechend verändert sich die Position des der Kupplung zugewandten Endes des Übertragungshebels relativ zu der Kupplungsfeder derart, dass der Abstand des Endes des Übertragungshebels relativ zu der Kupplungsfeder zunimmt oder abnimmt und somit ein Nachstellvorgang in beide Richtungen möglich ist.

Bei dieser Ausführungsform kann der Übertragungshebel an einem Gehäuse des Wipphebelaktors angelenkt sein, beispielsweise durch eine Drehachse. Um nun den verlagerbaren Keil zwischen dem Übertragungshebel und dem Wipphebel je nach der gewünschten Nachstellrichtung verschieben zu können, ist ein Koppeltrieb zwischen dem Gewindebolzen und dem verlagerbaren Keil vorgesehen, mittels dem eine Drehbewegung des Gewindebolzens in eine Verlagerungsbewegung des Keils umgesetzt werden kann. Wird das Eingriffsrad mittels des an der Traverse befestigten Hebels in Drehung versetzt, so sorgt der Koppeltrieb für eine Verlagerungsbewegung des Keils zwischen dem Übertragungshebel und dem Wipphebel. Je nach Drehrichtung des Eingriffsrads nimmt dann der Abstand zwischen dem Übertragungshebel und dem Wipphebel zu oder ab und damit das Ende der Übertragungshebels relativ zur Kupplungsfeder verlagert.

Die Erfindung wird im folgenden anhand der Zeichnung näher erläutert. Diese zeigt in:
Fig. 1 eine teilweise geschnittene Darstellung eines Wipphebelaktors nach der Erfindung gemäß einer ersten Ausführungsform;
Fig. 2 eine schematische Darstellung eines Wipphebelaktors nach einer zweiten Ausführungsform;
Fig. 3A verschiedene Eingriffsstellungen von Eingriffsklinken eines Hebels an einem Eingriffsrad;
Fig. 3B eine Darstellung ähnlich Fig. 3A zur Erläuterung von Eingriffsstellungen einer zweiten Eingriffsklinke eines Hebels am Eingriffsrad;
Fig. 4 eine schematische Darstellung einer weiteren Ausführungsform eines Wipphebelaktors;
Fig. 5 eine schematische Darstellung eines Wipphebelaktors gemäß einer weiteren Ausführungsform; und
Fig. 6 ein Diagramm zur Erläuterung eines Nachstellvorgangs.

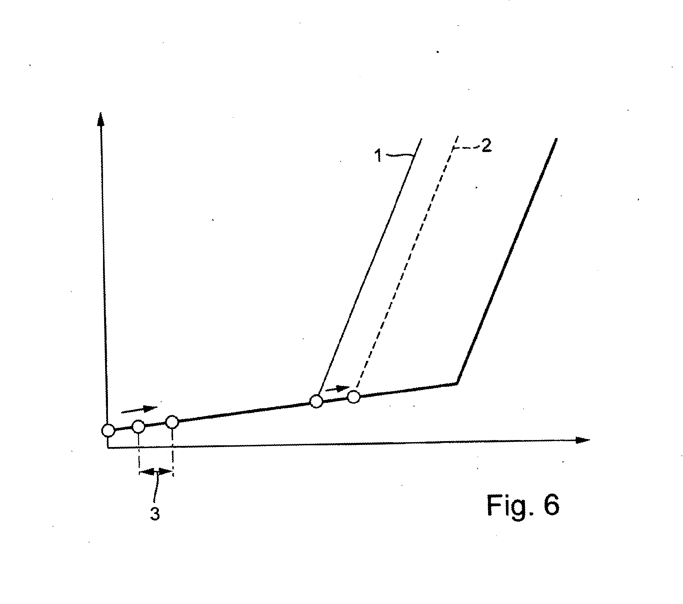

Zunächst wird unter Bezugnahme auf Fig. 6 der Zeichnung ein Nachstellschritt erläutert. Das Bezugszeichen 1 zeigt in einer schematischen Darstellung eine Kennlinie der Einrückkraft über dem Einrückweg einer Kupplung. Verschiebt sich nun aufgrund beispielsweise von Bauteiltoleranzen und Verschleiß diese Kennlinie in Richtung zu einem höheren Einrückweg zu einer Kennlinie 2, so würde dies bei einem Wipphebelaktor ohne Nachstellvorrichtung dazu führen, dass der Wipphebelaktor einen größeren Einrückweg an den Zungen der Kupplungsfeder bewerkstelligen muss. Es bedeutet dies mit anderen Worten, dass dies zu einer Veränderung der Kraft-Weg-Kennlinie des Wipphebelaktors gegenüber der aus der Auslegung bekannten Kennlinie führt. Um nun einen größeren Einrückweg zur Verfügung zu stellen, muss der Antrieb des bekannten Wipphebelaktors ohne Nachstellvorrichtung die Laufrolle weiter entlang eines Verfahrwegs verfahren, die Laufrolle stützt sich dabei an einer geneigten Wipphebelkurve des Wipphebelaktors ab, was wiederum zu einer Veränderung der auf den Antrieb wirkenden Rückstellkraft führt. Es bedeutet dies mit anderen Worten, dass sich die Rückstellkraft während der Lebensdauer der Kupplung bezogen auf den Verfahrweg ständig ändert.

Auch führt der größer werdende Verfahrweg bei Aufrechterhaltung der Selbstöffnungsfunktion der Kupplung zu einem Anstieg der Belastung des Antriebs. Um nun dieser Gegebenheit Rechnung zu tragen, kann der nach der Erfindung vorgesehene Wipphebelaktor Nachstellschritte durchführen. Wie es anhand von Fig. 6 der Zeichnung ersichtlich ist, kann der Wipphebelaktor einen mit dem Bezugszeichen 3 symbolisch dargestellten Nachstellschritt durchführen, der die Kennlinienverschiebung ausgleicht, indem die Anfangsposition des Endes des Wipphebels oder des Endes des Übertragungshebels entsprechend verschoben wird. Da der erfindungsgemäße Wipphebelaktor auch mit einer selbstnachstellenden Kupplung betrieben werden kann, wirkt die nach der Erfindung vorgesehene Einrichtung in beide Richtungen, kann also das Ende des Übertragungshebels bzw. das Ende Wipphebels relativ zur Kupplungsfeder in beide Richtungen verlagern.

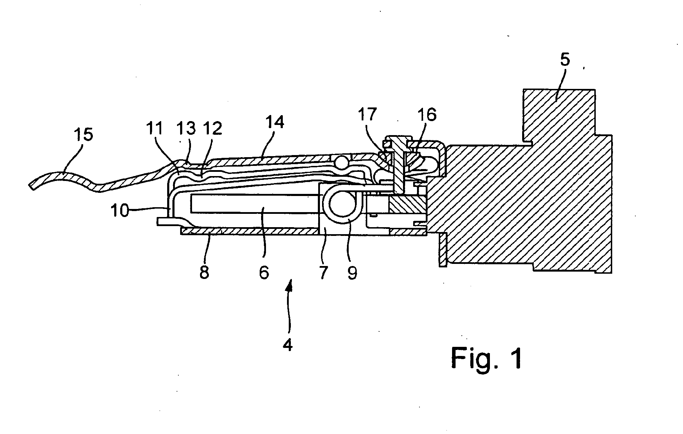

Fig. 1 der Zeichnung zeigt in einer teilweise geschnittenen Darstellung eine Ausführungsform eines erfindungsgemäßen Wipphebelaktors mit einem Übertragungshebel 14. Der Wipphebelaktor 4 besitzt einen Elektromotor 5, der eine Spindel 6 in Drehung versetzt, an der über beispielsweise einen Kugelumlauftrieb zur Wandlung der rotatorischen Bewegung in eine translatorische Bewegung eine Traverse 7 entlang eines Gestells 8 verschoben werden kann, sodass eine an der Traverse 7 drehbar gelagerte Laufrolle 9 - es ist nur eine Laufrolle 9 aufgrund der gewählten Darstellung gezeigt, während beidseits der Traverse 7 jeweils ein Laufrollenpaar vorgesehen ist - die Laufrolle 9 an dem Gestell 8 eine Abrollbewegung durchführt und sich dabei an einer geneigten Wipphebelkurve 10 eines Wipphebels 11 abstützt, sodass die Bewegung der Laufrolle 9 entlang des Gestells 8 zu einer Anheb- und Absenkbewegung des Wipphebels 11 führt.

Der Wipphebel 11 besitzt an seinem dem Elektromotor 5 gegenüberliegenden Ende eine Vertiefung 12, in der eine Vertiefung 13 des Übertragungshebels 14 relativ zur Vertiefung 12 verschwenkbar gelagert ist. Der Übertragungshebel 14 weist ein kupplungsfederseitiges Ende 15 auf, das der Beaufschlagung der nicht näher dargestellten Kupplungsfeder dient.

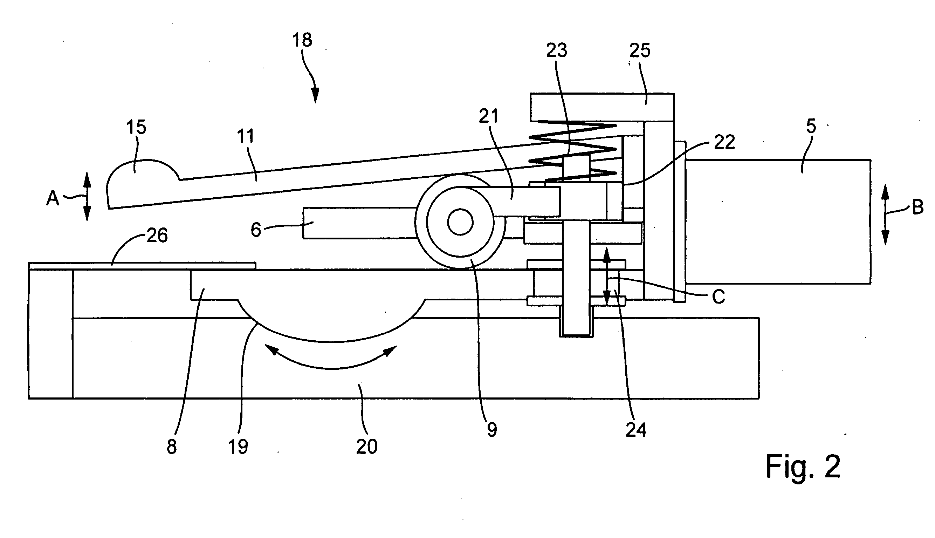

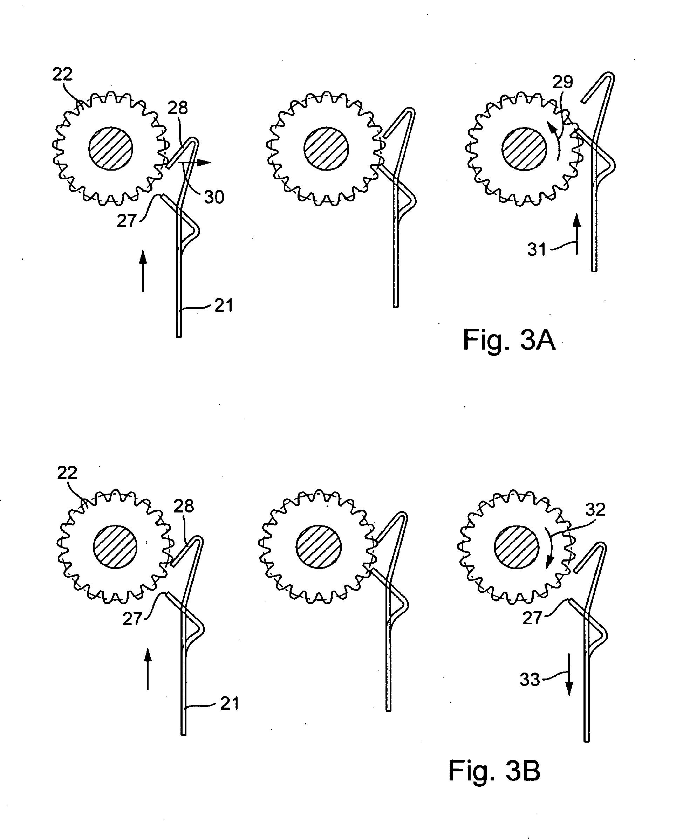

Der Übertragungshebel 14 wird an dem, dem Ende 15 gegenüberliegenden Ende von einem Drehgelenk 16 beaufschlagt, welches in einer Vertiefung 17 des Übertragungshebels aufgenommen ist. Über einen nachfolgend näher anhand von Fig. 2 und Fig. 3A sowie 3B erläuterten Hebel mit Eingriffsklinken und einem Eingriffsrad kann das Drehgelenk 16 relativ zum Gestell 8 in der Höhe verstellt werden, sodass eine Absenkbewegung des Drehgelenks 16 nach Fig. 1 zu einer Verschwenkbewegung des Übertragungshebels 14 an der Vertiefung 12 des Wipphebels 11 führt, sodass durch diese Absenkbewegung des Drehgelenks 16 eine Verlagerungsbewegung des kupplungsseitigen Endes 15 in der Zeichnungsebene in Richtung nach oben stattfindet. Damit kann ein Nachstellschritt realisiert werden.

Wird der in Fig. 1 dargestellte Wipphebelaktor 4 mit einer selbstnachstellenden Kupplung betrieben, so führt die Kupplung nach einem bestimmten Belagverschleiß eine kupplungsinterne Ausgleichbewegung zum Ausgleich des Verschleißes der Reibbeläge durch. In Folge davon nimmt der Lüftweg der Kupplung ab und durch eine entsprechende Betätigung der Traverse 7 mit dem daran festgelegten Hebel und einem entsprechenden Eingriff einer Eingriffsklinke in ein Eingriffsrad findet eine Drehbewegung eines mit dem Eingriffsrad drehfest verbundenen Gewindebolzens statt, sodass das Drehgelenk 16 in Richtung nach oben verlagert werden kann und sich damit das kupplungsseitige Ende 15 des Übertragungshebels 14 absenken lässt. Damit sind mit dem erfindungsgemäßen Wipphebelaktor Nachstellschritte zum Ausgleich eines Belagverschleißes möglich und auch Nachstellschritte, wenn der kupplungsinterne Verschleißausgleich einen kupplungsinternen Nachstellschritt durchgeführt hat, der regelmäßig aber erst bei einem größeren Belagverschleiß stattfindet, während die Nachstellschritte des Wipphebelaktors 4 auch bei deutlich geringerem Belagverschleiß bereits durchgeführt werden können.

Bei allen Ausführungsformen des Wipphebelaktors kann dabei ein Nachstellbedarf mittels beispielsweise einer Erfassung der Stromaufnahme des Elektromotors 5 und einem Abgleich mit Solldaten ermittelt werden. Auch ist es möglich, einen Nachstellbedarf über die Ermittlung der Rückstellgeschwindigkeiten durch Anfahren zeitabhängig festgelegter Positionen und Abgleich mit Solldaten möglich. Auch kann ein Nachstellbedarf beispielsweise durch die Ermittlung des erreichten Kupplungsmomentes durch Anfahren definierter Positionen und Abgleich mit Solldaten erreicht werden.

Fig. 2 der Zeichnung zeigt einen Wipphebelaktor 18 nach einer modifizierten Ausführungsform. Bei diesem Wipphebelaktor 18 kann das kupplungsfederseitige Ende 15 des Wipphebels 11 dadurch in Richtung des Doppelpfeils A verlagert werden, dass der gesamte Wipphebelaktor 18 in Richtung des Doppelpfeils B angehoben bzw. abgesenkt wird.

Zu diesem Zweck wird die Laufrolle 9 über eine entsprechende Betätigung der Spindel 6 durch den Elektromotor 5 entlang des Gestells 8 verlagert. Das Gestell 8 ist mit seiner Unterseite 19 ähnlich einer Kugelpfanne an einer Abstützung 20 gelagert. Wird nun nach einem der vorstehend beschriebenen Verfahren zur Ermittlung eines Nachstellbedarfs festgestellt, dass beispielsweise die positionsabhängige Stromaufnahme des Elektromotors deutlich höher geworden ist als dies entsprechend der Solldaten der Fall sein müsste, dann kann auf einen Belagverschleiß der Kupplung geschlossen werden und ein Nachstellschritt in die Wege geleitet werden.

Zu diesem Zweck wird die Laufrolle 9 über den Elektromotor 5 in Richtung zum Elektromotor 5 bewegt in einen Überweg, der einen Verfahrweg der Laufrolle 9 bei einer normalen Kupplungsbetätigung überschreitet, sodass ein Hebel 21 mit näher anhand von Fig. 3A und 3B ersichtlichen Eingriffsklinken mit einem Eingriffsrad 22 in Kontakt kommt und das Eingriffsrad 22 in Drehung versetzt. Das Eingriffsrad 22 befindet sich drehfest an einem Gewindebolzen 23 festgelegt, sodass die Drehbewegung des Eingriffsrads zu einer Drehbewegung des Gewindebolzens 23 führt, der sich mit einer Gewindebuchse 24 in Schraubeingriff befindet. Die Gewindebuchse 24 ist drehfest an einem Gehäuse 25 des Wipphebelaktors 18 festgelegt, sodass letztlich die Drehbewegung des Gewindebolzens 23 zu einem Anheben oder Absenken des Gehäuses 25 in Richtung des Doppelpfeils C führt.

Soll das Gehäuse 25 und damit der gesamte Wipphebelaktor 18 gegenüber der Abstützung 20 abgesenkt werden, so wird eine entsprechende Verfahrbewegung der Laufrolle 9 durch den Elektromotor 5 in die Wege geleitet. Mittels der Drehbewegung des Gewindebolzens 23 kann das Gehäuse 25 abgesenkt werden und führt dabei über die Unterseite 19 nach der Art eines Kugelgelenks eine Verschwenkbewegung an der Abstützung 20 durch, sodass sich das kupplungsfederseitige Ende 15 des Wipphebels 11 in Richtung des Doppelpfeils A in diesem Fall nach oben bewegt. Eine entsprechende Bestromung des Elektromotors 5 in entgegen gesetzte Drehrichtung führt zu einer Absenkbewegung des kupplungsfederseitigen Endes 15 aufgrund des Anhebens des Gehäuses 25 unterstützt durch eine Feder 26, die das abseitige Ende des Gestells 8 beaufschlägt.

Anhand von Fig. 3A und 3B werden nachfolgend Betätigungen des Eingriffsrads 22 über den Hebel 21 mit am Hebel 21 vorgesehenen Eingriffsklinken 27, 28 erläutert.

Wurde ein Nachstellbedarf ermittelt, so wird über den an der Traverse 7 befestigten Hebel 21 das Eingriffsrad 22 in Drehung versetzt. Fig. 3A zeigt dabei einzelne Schritte zur Betätigung des Eingriffsrads in Richtung des Pfeils 29. Über eine entsprechende Verfahrbewegung der Traverse 7 kommt die Eingriffsklinke 28 des Hebels 21 mit dem Eingriffsrad 22 in Kontakt und weicht dabei aufgrund der federnden Ausgestaltung des Hebels 21 in Richtung des Pfeils 30 nach außen aus. Eine weitere Verfahrbewegung des Hebels 21 führt dazu, dass die Eingriffsklinke 27 mit dem Eingriffsrad 22 in Kontakt kommt und das Eingriffsrad 22 durch eine weitere Verfahrbewegung des Hebels 21 in Richtung des Pfeils 31 zu einer Drehbewegung in Richtung des Pfeils 29 betätigt wird. Eine Verfahrbewegung der Traverse 7 in die entgegen gesetzte Richtung führt zu einer Verfahrbewegung des Hebels 21 entgegen der Richtung des Pfeils 31, während der die Eingriffsklinke 27 aufgrund der federnden Ausbildung des Hebels 31 nach außen ausweicht, bis die in Fig. 3A in der mittleren Stellung gezeigte Nachstellposition erreicht wurde. Eine Wiederholung des Nachstellschritts führt zu einer weiteren Verdrehbewegung des Eingriffsrads 22 in Richtung des Pfeils 29. Die Drehbewegung des Eingriffsrads 22 führt zu einer Drehbewegung des Gewindebolzens 23 und damit zu einem Anheben bzw. Absenken des kupplungsfederseitigen Endes 15 des Wipphebels 11 bzw. des Übertragungshebels 14. Soll nun die Traverse 7 zu einer normalen Betätigung der Kupplung aus dem Überweg heraus gefahren werden, so wird der Elektromotor 5 in entsprechender Drehrichtung bestromt und die Eingriffsklinke 28 kommt mit dem Eingriffsrad 22 in Eingriff und führt bei dieser Bewegung einen Nachstellschritt entgegen der gewünschten Drehrichtungsbewegung entsprechend dem Pfeil 29 durch. Es bedeutet dies mit anderen Worten, dass der letzte Nachstellschritt durch die Eingriffsklinke 28 rückgängig gemacht wird, sodass beispielsweise bei vier erforderlichen Nachstellschritten fünf Nachstellschritte mit der Eingriffsklinke 27 durchgeführt werden und der letzte Nachstellschritt durch die Eingriffsklinke 28 rückgängig gemacht wird.

Sollte ein Nachstellschritt in die entgegen gesetzte Richtung notwendig sein, so wird - wie dies in Fig. 3B der Zeichnung dargestellt ist - der Hebel 21 durch eine entsprechende Bewegung der Traverse 7 so verfahren, dass die Eingriffsklinke 28 positionsgesteuert mit dem Eingriffsrad 22 in Kontakt kommt, wie dies in der mittleren Zeichnung der Fig. 3B dargestellt ist. Durch eine entsprechende Bestromung des Elektromotors 5 mit einer daraus sich ergebenden Verfahrbewegung der Traverse 7 wird der Hebel 21 in Richtung des Pfeils 33 verschoben und die Eingriffsklinke 28 dreht das Eingriffsrad 22 entsprechend der Drehrichtung, die durch den Pfeil 32 dargestellt ist. Sollten mehrere Nachstellschritte gemäß Fig. 3B erforderlich sein, so wird der geschilderte Nachstellschritt wiederholt.

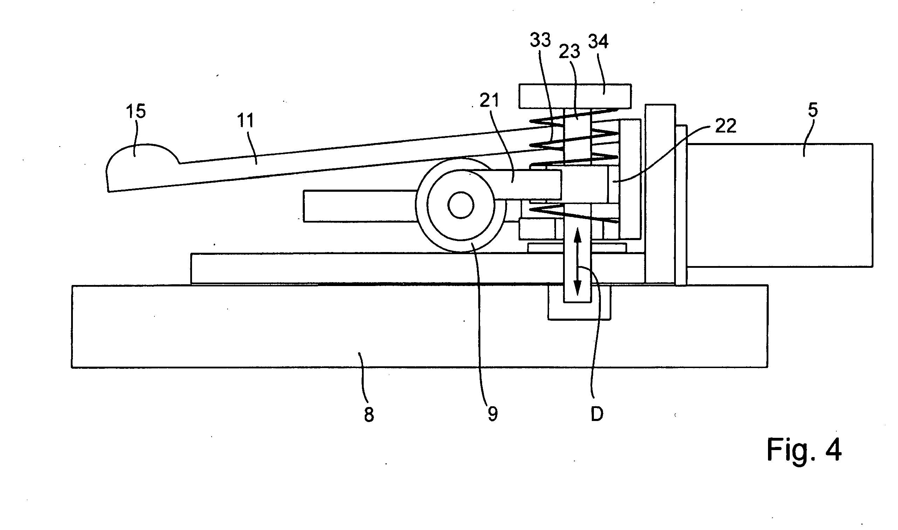

Fig. 4 zeigt eine weitere Ausführungsform eines Wipphebelaktors 33. Eine Verfahrbewegung der Laufrolle 9 über den Elektromotor 5 führt über den Hebel 21 zu einer entsprechenden Drehbewegung des Eingriffsrads 22. Das Eingriffsrad 22 ist drehfest an dem Gewindebolzen 23 festgelegt, der sich in Schraubeingriff befindet mit einem Gestell 8. Die Feder 33 zur Beaufschlagung des Wipphebels 11 befindet sich zwischen einer Platte 34 des Gewindebolzens 23 und dem Wipphebel 11 eingespannt, sodass letztlich eine Verlagerungsbewegung der Platte 34 durch eine Drehbewegung des Gewindebolzens 23 zu einer Änderung der Federspannung der Feder 33 führt. Dieser Vorgang führt letztlich dazu, dass sich das kupplungsfederseitige Ende des Wipphebels 11 in seiner Position relativ zur Kupplungsfeder verändert, wenn der Gewindebolzen 23 in Richtung des Doppelpfeils D verlagert wird.

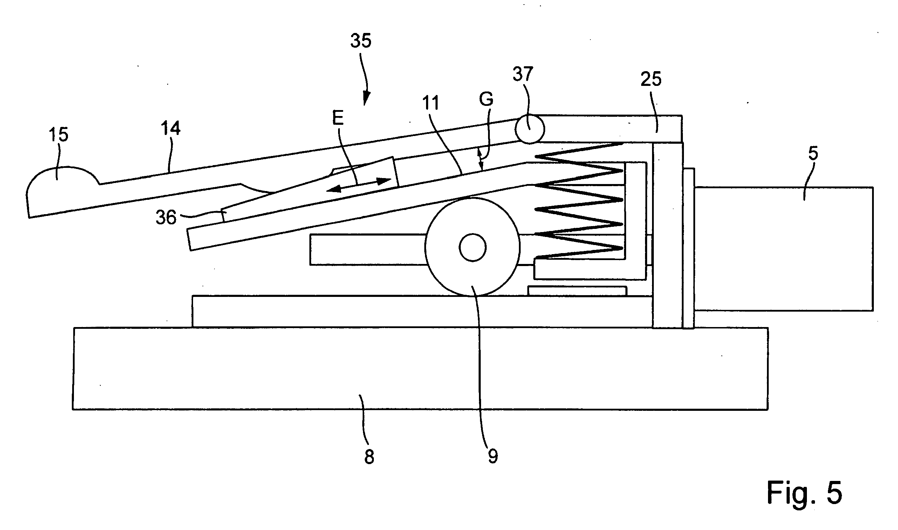

Fig. 5 der Zeichnung zeigt eine weitere Ausführungsform eines Wipphebelaktors 35. Wie es ohne weiteres ersichtlich ist, befindet sich zwischen dem Wipphebel 11 und dem Übertragungshebel 14 ein in Richtung des Doppelpfeils E verlagerbarer Keil 36 angeordnet. Eine Verlagerungsbewegung der Laufrolle 9 mittels des Elektromotors 5 führt über einen nicht näher dargestellten Koppeltrieb zwischen der Traverse 7 bzw. Laufrolle 9 zu einer Verlagerungsbewegung des Keils 36 in Richtung des Doppelpfeils E. Über diese Verlagerungsbewegung des Keils 36 kann der lichte Abstand G zwischen dem Übertragungshebel 14 und dem Wipphebel 11 verändert werden, sodass das kupplungsfederseitige Ende 15 des Übertragungshebels 14, der am Gehäuse 15 mittels eines Drehgelenks 37 gelagert ist, angehoben bzw. abgesenkt wird. Die Erfindung macht es daher möglich, Nachstellschritte des kupplungsfederseitigen Endes des Wipphebels bzw. eines Übertragungshebels in beide Richtungen durchzuführen und zwar während niedriger Belastung des Aktors mit Kupplungskraft.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Kennlinie
- 2: Kennlinie
- 3: Nachstellschritt
- 4: Wipphebelaktor
- 5: Elektromotor
- 6: Spindel
- 7: Traverse
- 8: Gestell
- 9: Laufrolle
- 10: Wipphebelkurve
- 11: Wipphebel
- 12: Vertiefung
- 13: Vertiefung
- 14: Übertragungshebel
- 15: Ende
- 16: Drehgelenk
- 17: Vertiefung
- 18: Wipphebelaktor
- 19: Unterseite
- 20: Abstützung
- 21: Hebel
- 22: Eingriffsrad
- 23: Gewindebolzen
- 24: Gewindebuchse
- 25: Gehäuse
- 26: Feder
- 27: Eingriffsklinke
- 28: Eingriffsklinke
- 29: Pfeil
- 30: Pfeil
- 31: Pfeil
- 32: Pfeil
- 33: Feder
- 34: Platte
- 35: Wipphebelaktor
- 36: Keil
- 37: Drehgelenk
- A: Doppelpfeil
- B: Doppelpfeil
- C: Doppelpfeil
- D: Doppelpfeil
- E: Doppelpfeil
- G: lichter Abstand

## Patentansprüche

1. Wipphebelaktor, insbesondere zur Betätigung einer Kupplung eines Fahrzeuges, mit mindestens einem, eine veränderliche Betätigungskraft zum Öffnen und/oder Schließen der Kupplung ausübenden Wipphebel (11), der mittels mindestens einer Feder (33) beaufschlagbar ist und bei dem ein Hebeldrehpunkt des Wipphebels (11) durch Verlagerung einer mittels eines Antriebs (5) betätigten, an einer Traverse (7) gelagerten Laufrolle (9) verlagerbar ist, an der der Wipphebel (11) über eine geneigte Wipphebelkurve (10) abgestützt ist, **dadurch gekennzeichnet, dass** der Wipphebelaktor eine aktiv verstellbare Einrichtung besitzt zum Ausgleich einer Veränderung des Kraft-Weg-Verhaltens der Kupplung, und dass die Einrichtung mittels Verlagerung der Traverse (7) in einen Überweg, der eine Verlagerungsbewegung der Traverse bei einer Kupplungsbetätigung überschreitet, bei weitgehend offener Kupplung zur Veränderung der Position des der Kupplung zugewandten Endes (15) des Wipphebels (11) oder eines Übertragungshebels (14) relativ zu einer Kupplungsfeder ausgebildet ist.

2. Wipphebelaktor nach Anspruch 1, **dadurch gekennzeichnet, dass** die Einrichtung ein an der Traverse (7) vorgesehener Hebel (21) ist, der bei Verlagerung der Traverse (7) in einen Überweg, der eine Verlagerungsbewegung der Traverse (7) bei einer Kupplungsbetätigung überschreitet, ein Mittel betätigt, welches die Position des der Kupplung zugewandten Endes (15) des Wipphebels (11) oder des Übertragungshebels (14) relativ zu einer Kupplungsfeder verändert.

3. Wipphebelaktor nach Anspruch 2, **dadurch gekennzeichnet, dass** das Mittel ein mit einem Eingriffsrad (22) drehfest verbundener Gewindebolzen (23) ist, und der Hebel (21) zur Betätigung des Eingriffsrads (22) zur Drehbewegung in beide Drehrichtungen ausgebildet ist.

4. Wipphebelaktor nach Anspruch 2 oder 3, **dadurch gekennzeichnet, dass** der Hebel (21) zwei Eingriffsklinken (27, 28) besitzt, von denen jeweils eine zur Betätigung des Eingriffsrads (22) in jeweils eine der beiden Drehrichtungen ausgebildet ist und der Hebel (21) federnd ausgebildet ist.

5. Wipphebelaktor nach Anspruch 3 oder 4, **dadurch gekennzeichnet, dass** sich der Gewindebolzen (23) in Schraubeingriff befindet mit einer Gewindebuchse (24), die an einem relativ zu einem Gestell (8) verschwenkbaren Gehäuse (25) des Wipphebelaktors (4) drehfest vorgesehen ist derart, dass eine Drehbewegung des Gewindebolzens (23) zu einer Verschwenkbewegung des Gehäuses (25) führt.

6. Wipphebelaktor nach Anspruch 5, **dadurch gekennzeichnet, dass** sich das Gehäuse (25) federbelastet an dem Gestell (8) schwenkbar abstützt und der Gewindebolzen (23) an dem Gestell (8) drehbar gelagert ist.

7. Wipphebelaktor nach Anspruch 3 oder 4, **dadurch gekennzeichnet, dass** die Feder (26) am Gewindebolzen (23) abgestützt ist und sich der Gewindebolzen (23) in Schraubeingriff mit einem Gehäuse (25) des Wipphebelaktors (4) befindet derart, dass eine Drehbewegung des Gewindebolzens (23) zu einer Veränderung der Federspannung und damit einer Veränderung der Position des der Kupplung zugewandten Endes (15) des Wipphebels (11) oder des Übertragungshebels (14) relativ zu der Kupplungsfeder führt.

8. Wipphebelaktor nach Anspruch 3 oder 4, **dadurch gekennzeichnet, dass** der Wipphebelaktor (4) einen relativ zum Wipphebel (11) verschwenkbaren Übertragungshebel (14) besitzt, der am Wipphebel (11) im Bereich des Wipphebelendes (15) gelagert ist und im Bereich des gegenüberliegenden Endes (15) mittels eines mit dem Gewindebolzen (23) in Wirkverbindung stehenden Drehgelenkes (16) relativ zu einem, eine Laufbahn der Laufrolle (9) bildenden Gestell (8) höhenverstellbar ist derart, dass eine Drehung des Gewindebolzens (23) zu einer Veränderung der Position des der Kupplung zugewandten Endes (15) des Übertragungshebels (14) relativ zu der Kupplungsfeder führt.

9. Wipphebelaktor nach Anspruch 3 oder 4, **dadurch gekennzeichnet, dass** der Wipphebelaktor (4) einen relativ zum Wipphebel (11) beabstandet angeordneten verschwenkbaren Übertragungshebel (14) besitzt und zwischen dem Übertragungshebel (14) und dem Wipphebel (11) ein verlagerbarer Keil (36) vorgesehen ist derart, dass eine Verlagerung des Keils (36) an dem Wipphebel (11) zu einer Veränderung des Abstands zwischen Übertragungshebel (14) und Wipphebel (11) und zu einer Veränderung der Position des der Kupplung zugewandten Endes (15) des Übertragungshebels (14) relativ zu der Kupplungsfeder führt.

10. Wipphebelaktor nach Anspruch 9, **dadurch gekennzeichnet, dass** der Übertragungshebel (14) an einem Gehäuse (25) des Wipphebelaktors (4) angelenkt ist.

11. Wipphebelaktor nach Anspruch 9 oder 10, **gekennzeichnet durch** einen Koppeltrieb zwischen dem Gewindebolzen (23) und dem verlagerbaren Keil (36), mittels dem eine Drehbewegung des Gewindebolzens (23) in eine Verlagerungsbewegung des Keils (36) umsetzbar ist.

## Claims

1. Rocker lever actuator, in particular for actuating a clutch of a vehicle, having at least one rocker lever (11) which exerts a variable actuating force for opening and/or closing the clutch, can be loaded by means of at least one spring (33), and in which a lever pivot point of the rocker lever (11) can be displaced by displacement of a running roller (9) which is actuated by means of a drive (5), is mounted on a crossmember (7) and on which the rocker lever (11) is supported via an inclined rocker lever cam (10),
**characterized in that** the rocker lever actuator has an actively adjustable device for compensating for a change in the force/displacement characteristic of the clutch, and **in that** the device is configured for changing the position of that end (15) of the rocker lever (11) or a transmission lever (14) which faces the clutch relative to a clutch spring when the clutch is largely open, by means of displacement of the crossmember (7) into an overtravel which exceeds a displacement movement of the crossmember in the case of a clutch actuation.

2. Rocker lever actuator according to Claim 1,
**characterized in that** the device is a lever (21) which is provided on the crossmember (7) and, if the crossmember (7) is displaced into an overtravel which exceeds a displacement movement of the crossmember (7) in the case of a clutch actuation, actuates a means which changes the position of that end (15) of the rocker lever (11) or the transmission lever (14) which faces the clutch relative to a clutch spring.

3. Rocker lever actuator according to Claim 2,
**characterized in that** the means is a threaded bolt (23) which is connected fixedly in terms of rotation to an engagement wheel (22), and the lever (21) is configured for actuating the engagement wheel (22) for the rotational movement in both rotational directions.

4. Rocker lever actuator according to Claim 2 or 3, **characterized in that** the lever (21) has two engagement pawls (27, 28), of which in each case one is configured for actuation of the engagement wheel (22) in in each case one of the two rotational directions, and the lever (21) is of resilient configuration.

5. Rocker lever actuator according to Claim 3 or 4, **characterized in that** the threaded bolt (23) is in screwed engagement with a threaded bush (24) which is provided in a rotationally fixed manner on a housing (25) of the rocker lever actuator (4), which housing (25) can be pivoted relative to a frame (8), in such a way that a rotational movement of the threaded bolt (23) leads to a pivoting movement of the housing (25).

6. Rocker lever actuator according to Claim 5,
**characterized in that** the housing (25) is supported pivotably on the frame (8) in a spring-loaded manner, and the threaded bolt (23) is mounted rotatably on the frame (8).

7. Rocker lever actuator according to Claim 3 or 4, **characterized in that** the spring (26) is supported on the threaded bolt (23), and the threaded bolt (23) is in screwed engagement with a housing (25) of the rocker lever actuator (4) in such a way that a rotational movement of the threaded bolt (23) leads to a change in the spring stress and therefore a change in the position of that end (15) of the rocker lever (11) or the transmission lever (14) which faces the clutch relative to the clutch spring.

8. Rocker lever actuator according to Claim 3 or 4, **characterized in that** the rocker lever actuator (4) has a transmission lever (14) which can be pivoted relative to the rocker lever (11), is mounted on the rocker lever (11) in the region of the end (15) of the rocker lever and can have its height adjusted in the region of the opposite end (15) relative to a frame (8) which forms a raceway of the running roller (9), by means of a rotary joint (16) which is operatively connected to the threaded bolt (23), in such a way that a rotation of the threaded bolt (23) leads to a change in the position of that end (15) of the transmission lever (14) which faces the clutch relative to the clutch spring.

9. Rocker lever actuator according to Claim 3 or 4, **characterized in that** the rocker lever actuator (4) has a pivotable transmission lever (14) which is arranged spaced apart relative to the rocker lever (11), and a displaceable wedge (36) is provided between the transmission lever (14) and the rocker lever (11) in such a way that a displacement of the wedge (36) on the rocker lever (11) leads to a change in the spacing between the transmission lever (14) and the rocker lever (11) and to a change in the position of that end (15) of the transmission lever (14) which faces the clutch relative to the clutch spring.

10. Rocker lever actuator according to Claim 9,
**characterized in that** the transmission lever (14) is articulated on a housing (25) of the rocker lever actuator (4).

11. Rocker lever actuator according to Claim 9 or 10, **characterized by** a coupler drive between the threaded bolt (23) and the displaceable wedge (36), by means of which coupler drive a rotational movement of the threaded bolt (23) can be converted into a displacement movement of the wedge (36).

## Revendications

1. Actionneur à levier basculant, notamment pour actionner un accouplement d'un véhicule, comprenant au moins un levier basculant (11) qui exerce une force d'actionnement variable pour ouvrir et/ou fermer l'accouplement, lequel peut être sollicité par au moins un ressort (33) et avec lequel un point de rotation du levier basculant (11) peut être déplacé en déplaçant un galet de roulement (9) monté sur une traverse (7) et actionné au moyen d'un mécanisme d'entraînement (5), galet de roulement (9) sur lequel le levier basculant (11) vient s'appuyer par le biais d'une came de levier basculant inclinée (10), **caractérisé en ce que** l'actionneur à levier basculant possède un dispositif à positionnement actif destiné à compenser une modification du rapport force/course de l'accouplement, et que le dispositif, au moyen d'un déplacement de la traverse (7) dans un mouvement perdu, lequel dépasse un mouvement de changement de position de la traverse lors d'un actionnement de l'accouplement, est configuré pour, lorsque l'accouplement est largement ouvert, modifier la position de l'extrémité (15) faisant face à l'accouplement du levier basculant (11) ou d'un levier de transmission (14) par rapport à un ressort de l'accouplement.

2. Actionneur à levier basculant selon la revendication 1, **caractérisé en ce que** le dispositif est un levier (21) prévu sur la traverse (7) qui, lors du déplacement de la traverse (7) dans un mouvement perdu, lequel dépasse un mouvement de changement de position de la traverse (7) lors d'un actionnement de l'accouplement, actionne un moyen qui modifie la position de l'extrémité (15) faisant face à l'accouplement du levier basculant (11) ou d'un levier de transmission (14) par rapport à un ressort de l'accouplement.

3. Actionneur à levier basculant selon la revendication 2, **caractérisé en ce que** le moyen est un goujon fileté (23) relié en rotation solidaire avec une roue d'engrènement (22) et le levier (21) est configuré pour actionner la roue d'engrènement (22) en vue d'un mouvement de rotation dans les deux sens de rotation.

4. Actionneur à levier basculant selon la revendication 2 ou 3, **caractérisé en ce que** le levier (21) possède deux cliquets d'engrènement (27, 28) dont chacun est respectivement configuré pour actionner la roue d'engrènement (22) dans l'un des deux sens de rotation respectifs et le levier (21) est réalisé flexible.

5. Actionneur à levier basculant selon la revendication 3 ou 4, **caractérisé en ce que** le goujon fileté (23) se trouve en prise vissée avec une douille taraudée (24), laquelle est prévue en rotation solidaire sur un boîtier (25) de l'actionneur à levier basculant (4) pouvant pivoter par rapport à un bâti (8), de telle sorte qu'un mouvement de rotation du goujon fileté (23) provoque un mouvement de pivotement du boîtier (25).

6. Actionneur à levier basculant selon la revendication 5, **caractérisé en ce que** le boîtier (25) s'appuie sur le bâti (8) de manière pivotante et sous la charge d'un ressort et le goujon fileté (23) est monté de manière rotative sur le bâti (8).

7. Actionneur à levier basculant selon la revendication 3 ou 4, **caractérisé en ce que** le ressort (26) s'appuie sur le goujon fileté (23) et le goujon fileté (23) se trouve en prise vissée avec un boîtier (25) de l'actionneur à levier basculant (4) de telle sorte qu'un mouvement de rotation du goujon fileté (23) provoque une modification de la tension du ressort et ainsi une modification de la position de l'extrémité (15) faisant face à l'accouplement du levier basculant (11) ou du levier de transmission (14) par rapport au ressort de l'accouplement.

8. Actionneur à levier basculant selon la revendication 3 ou 4, **caractérisé en ce que** l'actionneur à levier basculant (4) possède un levier de transmission (14) qui peut pivoter par rapport au levier basculant (11), lequel est monté sur le levier basculant (11) dans la zone de l'extrémité du levier basculant (15), et peut être réglé en hauteur dans la zone de l'extrémité opposée (15) au moyen d'une articulation tournante (16) en liaison active avec le goujon fileté (23) par rapport à un bâti (8) qui forme une bande de roulement du galet de roulement (9), de telle sorte qu'une rotation du goujon fileté (23) provoque une modification de la position de l'extrémité (15) faisant face à l'accouplement du levier de transmission (14) par rapport au ressort de l'accouplement.

9. Actionneur à levier basculant selon la revendication 3 ou 4, **caractérisé en ce que** l'actionneur à levier basculant (4) possède un levier de transmission (14) qui peut pivoter et qui est écarté par rapport au levier basculant (11) et une clavette (36) positionnable est prévue entre le levier de transmission (14) et le levier basculant (11), de telle sorte qu'un changement de position de la clavette (36) sur le levier basculant (11) provoque une modification de l'écart entre le levier de transmission (14) et le levier basculant (11) et une modification de la position de l'extrémité (15) faisant face à l'accouplement du levier de transmission (14) par rapport au ressort de l'accouplement.

10. Actionneur à levier basculant selon la revendication 9, **caractérisé en ce que** le levier basculant (14) est monté de manière articulée à un boîtier (25) de l'actionneur à levier basculant (4).

11. Actionneur à levier basculant selon la revendication 9 ou 10, **caractérisé par** une transmission d'accouplement entre le goujon fileté (23) et la clavette positionnable (36), au moyen de laquelle un mouvement de rotation du goujon fileté (23) peut être transformé en un mouvement de positionnement de la clavette (36).
